# EUROPÄISCHE PATENTSCHRIFT

(11) **EP 3 684 743 B1**
(45) Veröffentlichungstag und Bekanntmachung des Hinweises auf die Patenterteilung: **17.11.2021**
(21) Anmeldenummer: 19730146.8
(22) Anmeldetag: 07.06.2019
(51) Int. Cl.: C04B 37/00

(54) **VERFAHREN ZUM VERBINDEN VON BAUTEILEN AUS SIC**
METHOD FOR CONNECTING COMPONENTS MADE OF SIC
PROCÉDÉ POUR ASSEMBLER DES PIÈCES EN SIC

(30) Priorität: 15.06.2018 DE 102018114463
(43) Veröffentlichungstag der Anmeldung: 29.07.2020
(73) Patentinhaber: SiCeram GmbH, 07751 Jena (DE)
(72) Erfinder: KERBER, Albert, 99425 Weimar (DE); KNORR, Jürgen, 01328 Dresden (DE)
(74) Vertreter: Laufhütte, Dieter
(86) Internationale Anmeldenummer: PCT/EP2019/065021
(87) Internationale Veröffentlichungsnummer: WO 2019/238580

(56) Entgegenhaltungen:
- WO-A1-2013/050172
- DE-A1-102008 040 260
- US-A- 5 407 504

## Beschreibung

Die Erfindung betrifft ein Verfahren zum Verbinden von Bauteilen aus gesintertem und insbesondere heißgepresstem Siliziumkarbid (SSiC).

Das Verbinden von keramischen Bauteilen wird notwendig, wenn entweder komplizierte Bauteile nicht monolithisch hergestellt werden können oder wenn der Verwendungszweck einen Fügevorgang erfordert wie das Verschließen eines keramischen Behälters mit einem Deckel aus Keramik nach Befüllung des Behälters.

Für das stoffschlüssige Verbinden der Paarung Keramik-Keramik von gesinterten Bauteilen stehen bisher nur wenige Fügeverfahren zur Verfügung. Beispielsweise offenbart Brevier "Technische Keramik", Fahner Verlag 2003 Löt- und Klebeverfahren unter Verwendung von Loten und Klebern. Bei Klebern und metallischen Loten ist es offensichtlich, dass die Fügenaht sich hinsichtlich ihrer Zusammensetzung und Eigenschaften vom Material der zu fügenden Bauteile unterscheidet. Diese artfremde Fügung ist eine kritische Schwachstelle, die die Verwendungsfähigkeit des so gefügten Körpers generell in Frage stellen kann, wenn z.B. die Hochtemperaturbeständigkeit und/oder das Korrosionsverhalten der Naht nicht den Parametern der Bauteile entsprechen und dadurch den Einsatzbedingungen nicht genügen. Aus US 7,462,25 B2 ist ferner ein Laserfüge-Verfahren bekannt. Obwohl das stoffschlüssige Verbinden von Bauteilen aus gesintertem Siliziumkarbid (SSiC) durch dieses moderne Fügeverfahren gelingt, führt die Verwendung von Loten mit schmelzfähigen Anteilen (Glaslot) zwar zur Bildung von Siliziumkarbid in der Naht, doch es handelt sich um ein Flüssigphasen-Siliziumkarbid (LPSiC), also bezüglich der Bauteile um ein artfremdes Siliziumkarbid. Das LPSiC weist deutlich schlechtere Eigenschaften hinsichtlich Hochtemperatur- und Korrosionsbeständigkeit auf als die zu verbindenden Bauteile aus drucklos gesintertem Siliziumkarbid (SSiC).

DE 10 2008 040260 A1 offenbart ein Verfahren zum Verbinden von Bauteilen aus gesintertem LPS Siliziumkarbid.

US 5 407 504 A offenbart ein Verfahren zum Verbinden von Bauteilen aus gesintertem und insbesondere heißgepresstem Siliziumkarbid.

Derzeit ist keine Technologie bekannt, die ein arteigenes Verbinden von Bauteilen aus gesintertem oder heißgepresstem Siliziumkarbid in einem effektiven Kurzzeit-Prozess ermöglicht und gleichzeitig die ausgezeichneten Eigenschaften der Bauteile für den gefügten Körper insgesamt erhält.

Es ist daher Aufgabe der vorliegenden Erfindung, ein Verfahren bereitzustellen, dass eine arteigene stoffschlüssige Verbindung von Bauteilen aus gesintertem oder heißgepresstem Siliziumkarbid gewährleistet, die zudem sicher und dauerhaft ist und deren Herstellung nur einen kurzen, weitgehend auf die Fügezone begrenzten Energieeintrag erfordert, um andere benachbarte Materialien, wie beispielsweise das Füllgut in einem Behälter, thermisch möglichst wenig zu belasten.

Vor diesem Hintergrund betrifft die Erfindung ein Verfahren zum Verbinden von Bauteilen aus gesintertem und insbesondere heißgepresstem Siliziumkarbid, mit den folgenden Schritten: Einbringen eines sinterfähigen Grünkörpers aus einer thermoplastischen SiC-Masse in einen Verbindungsbereich zwischen gegenüberliegenden Verbindungsflächen der Bauteile; Erhitzen des Grünkörpers und des Verbindungsbereichs auf Sintertemperatur unter Schutzgasatmosphäre oder Vakuum; und Verpressen der Bauteile mit dem erhitzten Grünkörper durch Beaufschlagung eines Sinterdrucks.

Nach Abschluss des Sinterprozesses kann die Abkühlung erfolgen.

Die Aufgabe wird also gelöst durch Heißpressen in Kombination mit der Verwendung eines speziell auf die Bauteile und den Fügeprozess abgestimmten Grünkörpers. Es entsteht eine arteigene Verbindung der Bauteile. Ein sinterfähiger Grünkörper aus thermoplastischer SiC-Masse wird zwischen die zu verbindenden SSiC-Teile gebracht und unter Schutzgas, beispielsweise Argon, oder Vakuum, jedenfalls unter Sauerstoffausschluss auf Sintertemperatur erhitzt. Durch das Aufbringen einer Axialkraft senkrecht zur Fügenaht wird eindimensionale Schwindung erzwungen. Ein uniaxialer Pressdruck verhindert eine beim drucklosen Sintern oftmals auftretende dreidimensionale Schwindung, die Risse in der Fügenaht hervorrufen kann.

Aus dem Stand der Technik sind für ein Kurzzeit-Sintern das induktive Heißpressen (IHP) und das Spark-Plasma-Sintering SPS bzw. Pulsed Electric Current Sintering (PECS) bekannt. Das Charakteristische dieser beiden Sinterverfahren besteht in der kombinierten Einwirkung von hohen Temperaturen und Drücken auf das Sintergut. Beide Verfahren wurden bisher jedoch nur zur Herstellung gesinterter Bauteile aus pulverförmigen Ausgangsmaterialien eingesetzt. Erfindungsgemäß können Aspekte dieser Verfahren bei der Verbindung bereits gesinterter Teile Anwendung finden.

Der in den Verbindungsbereich eingebrachte Grünkörper weist eine auf die Fügeflächengeometrie und Oberflächenbeschaffenheit der Fügeflächen der Bauteile abgestimmte Gestalt auf. Vorzugsweise liegt der Grünkörper in Form einer dünnen Schicht im Sinne einer Nahtfolie vor. Die Dicke der Nahtfolie kann beispielsweise 1 mm oder weniger betragen.

In der Erfindung wird der Grünling vor seiner Einbringung zwischen die Bauteile teilentbindert. Der Bindemittelgehalt soll so sein, dass Flexibilität und damit Handhabbarkeit und Anpassung an die Verbindungsflächen der Bauteile erhalten bleiben.

In der Erfindung werden Grünlinge mit einer Gründichte von zwischen 1,5 und 2 g/cm³, vorzugsweise von zwischen 1,6 und 1,9 g/cm³ verwendet.

In einer Ausführungsform ist vorgesehen, dass die Sintertemperatur bei 1800-1950 °C liegt und/oder dass der Sinterdruck bei 20-40 MPa liegt und/oder dass Sinterdruck und Sintertemperatur für 5-15 Minuten aufrechterhalten werden. Die Druckbeaufschlagung beginnt vorzugsweise noch vor Erreichen der Sintertemperatur, aber nach der ersten Phase. Während der Sinterphase bei Sinterbedingungen (Druck und Temperatur) bildet sich die Verbindung zwischen den Bauteilen.

In einer Ausführungsform ist vorgesehen, dass das Erhitzen des Grünkörpers wenigstens zwei Phasen umfasst, wobei der Grünkörper in einer ersten Phase auf eine unterhalb der Sintertemperatur liegende Entgasungstemperatur und erst in einer zweiten Phase auf Sintertemperatur erhitzt wird, wobei vorzugsweise vorgesehen ist, dass der Verbindungsbereich während der ersten Phase des Erhitzens evakuiert wird und während der zweiten Phase mit Schutzgas beaufschlagt wird. Die zwei Phasen können im Rahmen eines konstanten Temperaturanstiegs aufeinander folgen, es kann aber auch vorgesehen sein, dass die Temperatur nicht konstant zum Anstieg gebracht wird sondern über einen gewissen Zeitraum auf einer unterhalb der Sintertemperatur liegenden Entgasungstemperatur gehalten wird. So kann vorgesehen sein, dass die Aufheizung der Fügezone zunächst mit Teillast erfolgt, um bei Vakuum das Ausgasen des Grünkörpers und der Verbindungsbereiche zu unterstützen. Geeignete Restdrücke für das Vakuum umfassen 0,5-2 mbar. Die Entgasungstemperatur kann beispielsweise bei 300-800°C liegen. Sodann wird das Evakuieren beendet und der Reaktionsraum mit Schutzgas gefüllt. Geeignete Schutzgasdrücke liegen beispielsweise zwischen 1-2,5 mbar. Die weitere Aufheizung erfolgt nun mit Volllast.

In einer Ausführungsform ist vorgesehen, dass der Grünkörper vor dem Erhitzen zwischen den Verbindungsflächen fixiert wird. Das Verfahren beruht auf dem Einsetzen einer Sandwich-Anordnung bestehend aus dem ersten Bauteil, dem Grünkörper und dem zweiten Bauteil in eine Presse und einer sanften Druckauflastung zur Fixierung der Geometrie.

In einer Ausführungsform ist vorgesehen, dass das Erhitzen des Grünkörpers mittels Induktion erfolgt. Eine induktive Erhitzung ermöglicht die Konzentration des thermischen Energieeintrags auf die Naht und deren nächste Umgebung. Die Dauer der Einwirkung kann kurz gehalten werden.

Alternativ oder zusätzlich kann das Erhitzen auch mittels Widerstandsheizung erfolgen.

In einer Ausführungsform ist vorgesehen, dass der Grünkörper unter Verwendung eines Suszeptors erhitzt wird. Ein Suszeptor ist ein in unmittelbarer Nähe des Grünlings angeordnetes Bauteil aus einem Material, dass elektromagnetische Energie aufnehmen und in Hitze umwandeln kann. Ein geeignetes Material umfasst Graphit, alternativ eignen sich aber beispielsweise auch rostfreier Stahl, Molybdän, Aluminium oder SiC. Der Suszeptor kann beispielsweise in Form eines Ringes oder einer Scheibe eingesetzt werden. Wird das Verfahren zum Verschluss eines Behälters oder zum Verbinden von Rohrflanschen eingesetzt, ist es denkbar, dass ein Suszeptor an der von der Wärmequelle bzw. Spule abgewandten Seite der Bauteile angeordnet wird.

In einer Ausführungsform ist vorgesehen, dass während des Verpressens eine vorzugsweise gepulste Gleichspannung über Verbindungsflächen der Bauteile und den Grünling gelegt wird. Das Anlegen einer gepulsten Gleichspannung über die Fügezone kann die Reaktionsfreudigkeit an den Verbindungsflächen erhöhen und somit den Sinterprozess beschleunigen und die Festigkeit der Verbindung erhöhen.

Die Erfindung betrifft weiterhin die Verwendung eines erfindungsgemäßen Verfahrens zum Verschließen eines Behälters mit einem Deckel, wobei zumindest die Kontaktflächen des Behälters und Deckels aus gesintertem oder heißgepressten Siliziumkarbid (SiC) bestehen. Vorzugsweise bestehen Behälter und Deckel insgesamt aus gesintertem oder heißgepressten Siliziumkarbid (SiC). Die Anwendung auf Behälter und Deckel umfassend oder bestehend aus gesintertem SiC (SSiC) kann besonders bevorzugt sein. Soweit der Behälter mit einem Material befüllt ist, kann zwischen das Füllgut und dem Fügebereich ein thermischer Schild eingebracht werden, um das Füllgut vor thermischer Belastung zu schützen.

In einer Ausführungsform ist vorgesehen, dass der Behälter radioaktives oder toxisches Material enthält. Das Verfahren kann insbesondere bei der Endlagerung von radioaktivem Abfall in Behältern aus gesintertem oder heißgepresstem Siliziumkarbid (SiC) Anwendung finden. Die Behälter können dabei mit dem radioaktiven Material befüllt und mit einem Deckel verschlossen werden, wobei Behälter und Deckel anhand eines erfindungsgemäßen Verfahrens verbunden werden. Die verschlossenen Behälter können dann in einer Endlagerstätte aufbewahrt werden.

Weitere geeignete Anwendungsmöglichkeiten für das erfindungsgemäße Verfahren umfassen das Verbinden von Rohren mit Rohrflanschen, zweier oder mehrerer Platten, eines Rads und einer Welle oder dergleichen, wobei zumindest die Kontaktflächen aus gesintertem oder heißgepressten Siliziumkarbid (SiC) bestehen.

Weitere Einzelheiten und Vorteile der Erfindung ergeben sich aus den nachfolgend anhand der Figuren dargestellten Ausführungsbeispielen. In den Figuren zeigen:
- Figur 1:: den Aufbau einer beispielhaften Anlage zur Durchführung eines erfindungsgemäßen Verfahrens;
- Figur 2:: den Aufbau einer alternativen Anlage zur Durchführung eines erfindungsgemäßen Verfahrens;
- Figur 3:: den Aufbau einer beispielhaften Anlage zum Verschluss eines Behälters anhand eines erfindungsgemäßen Verfahrens;
- Figur 4:: den Aufbau einer alternativen Anlage zum Verschluss eines Behälters anhand eines erfindungsgemäßen Verfahrens;
- Figur 5:: eine schematische Darstellung der Prozessführung des erfindungsgemäßen Verfahrens in einer Anlage gemäß Figur 2;
- Figur 6:: Beispiele verschiedener Bauteilgeometrien, die anhand des erfindungsgemäßen Verfahrens verbunden werden können; und
- Figur 7:: mikroskopische Aufnahmen einer im Rahmen eines erfindungsgemäßen Verfahrens hergestellten Fügenaht.

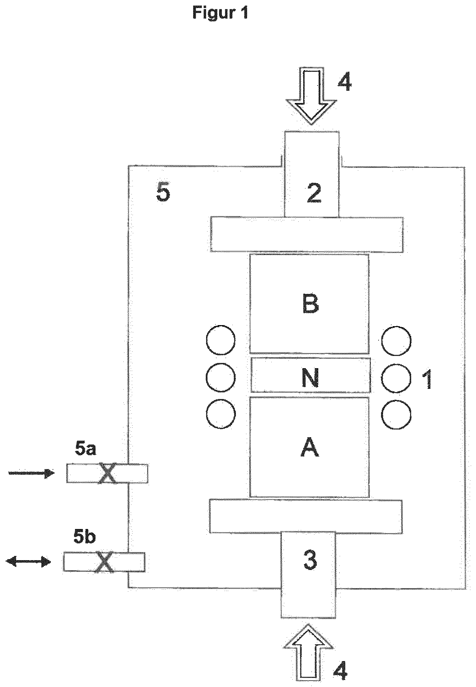

Figur 1 zeigt den Aufbau einer beispielhaften Anlage zur Durchführung eines erfindungsgemäßen Verfahrens.

Zwischen die zu fügenden Bauteile A und B wird die Nahtfolie N gelegt und die Fügegeometrie durch einen leichten Druck zwischen Oberstempel 2 und Unterstempel 3 fixiert. Die Richtung der Presskraft ist mit den Pfeilen 4 veranschaulicht. Die Erwärmung der Fügezone erfolgt direkt über die Induktionsspule 1. Da der Sinterprozess eine Schutzgasatmosphäre bei niedrigem Gasdruck erfordert, umschließt die Schutzgas-Kammer 5 die gesamte Fügezone und die genannten Anlagenteile.

Schutzgas kann durch Schutzgasanschluss 5a eingeleitet werden. Ein weiterer Anschluss 5b dient zum Evakuieren und Belüften. Beide Anschlüsse 5a und 5b sind mit Ventilen versehen.

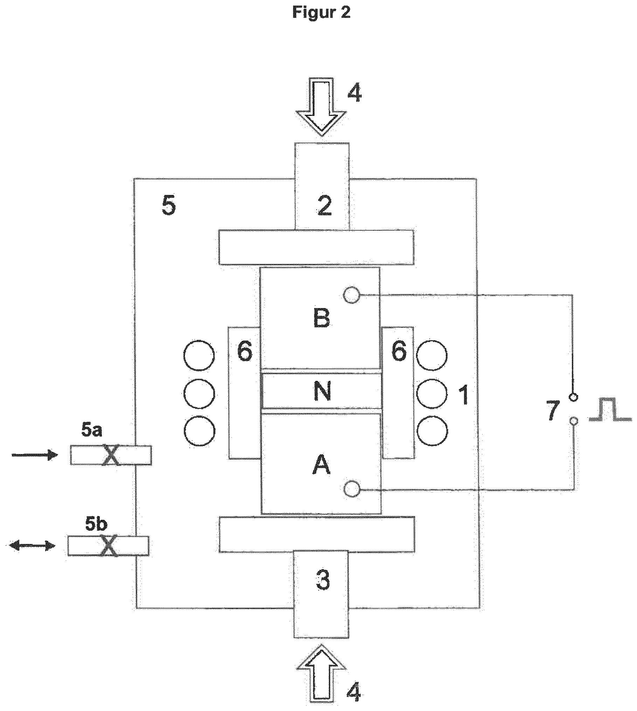

Figur 2 zeigt den Aufbau einer alternativen Anlage zur Durchführung eines erfindungsgemäßen Verfahrens. Korrespondierende Teile sind mit identischen Bezugszeichen versehen.

In dieser Variante erfolgt eine indirekter Erwärmung der Fügezone durch Wärmeleitung von geeignet angeordneten Suszeptoren 6, die ihrerseits beispielsweise direkt induktiv anhand der Induktionsspule 1 oder durch Stromfluss aufgeheizt werden. Zur beschleunigten Einleitung des Sinterprozesses kann über die Fügezone eine gepulste Gleichspannung 7 angelegt werden.

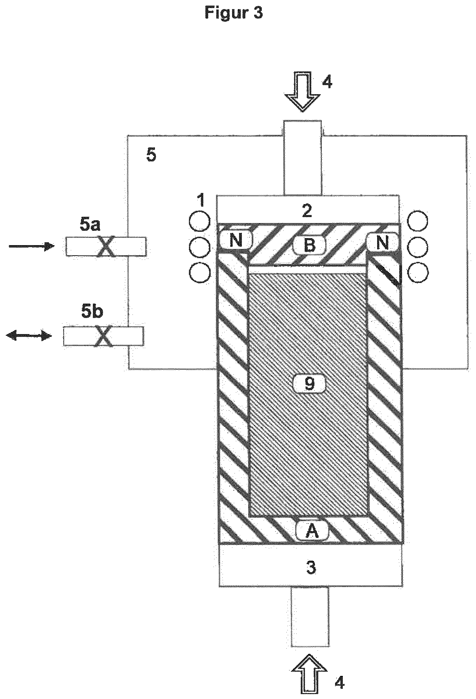

Figur 3 zeigt den prinzipiellen Aufbau einer beispielhaften Anlage für das Verschließen eines gesinterten Behälters A mit dem gesinterten Deckel B anhand des erfindungsgemäßen Verfahrens. Wiederum sind korrespondierende Teile mit identischen Bezugszeichen versehen.

Der Behälter umfasst Füllgut 9. Die Nahtfolie N ist in ihrer Form und Dicke an die Fügeflächengeometrie und die Oberflächenbeschaffenheit der Fügeflächen (Rautiefe, Parallelität) angepasst. Im einfachsten Fall erfolgt auch hier wieder die Erwärmung der Fügezone direkt induktiv.

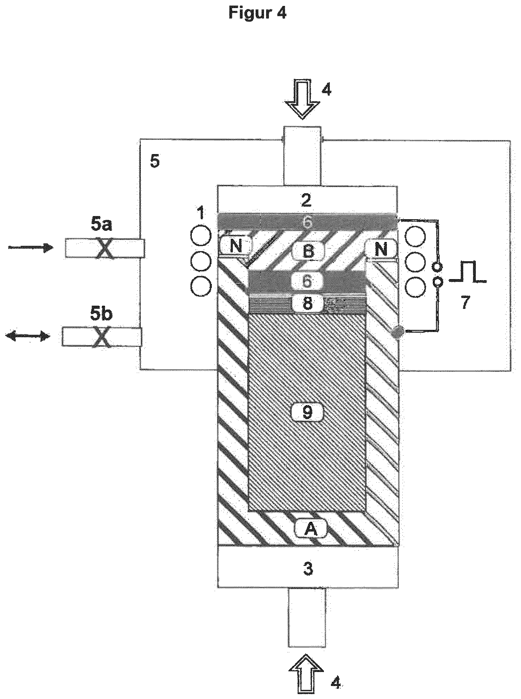

Spezielle Anwendungsfälle können eine Erweiterung des Aufbaus gemäß Figur 4 vorteilhaft machen. Erneut sind korrespondierende Teile mit identischen Bezugszeichen versehen.

Um die Sinterzeit kurz zu halten, erfolgt die Erwärmung der Fügezone sowohl direkt über die Induktionsspule 1 als auch indirekt über Wärmeleitung von den Suszeptoren 6, die ihrerseits von der Induktionsspule 1 mit aufgeheizt werden. Zur beschleunigten Einleitung des Sinterprozesses, verbunden mit einem zusätzlichen Energieeintrag zur Erwärmung kann eine über der Fügezone angelegte gepulste Gleichspannung 7 hilfreich sein. Zum Schutz des Füllgutes 9 vor unzulässiger thermischer Belastung dient der thermische Schild 8.

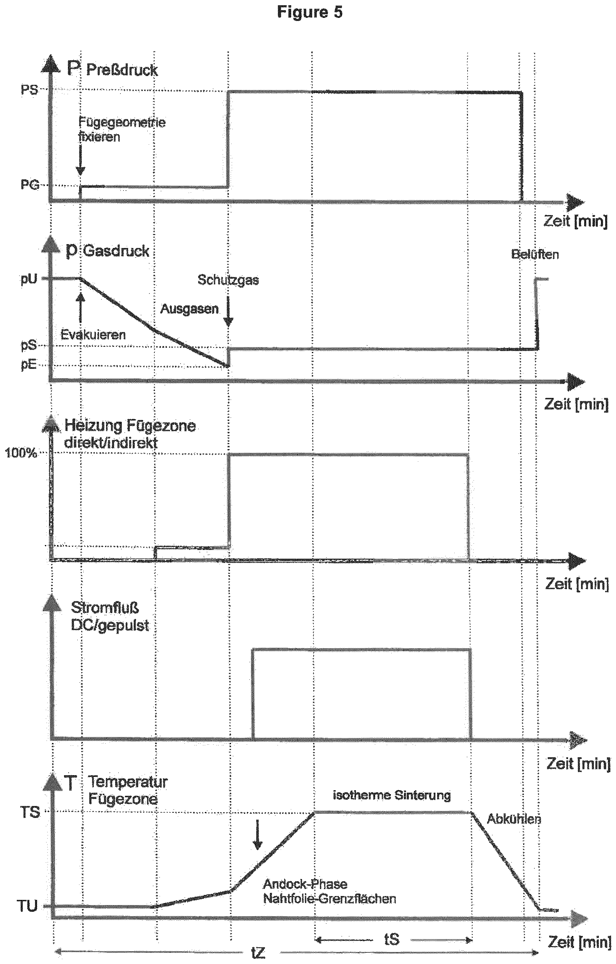

Figur 5 zeigt schematisch die Prozessführung des erfindungsgemäßen Verfahrens in einer Anlage gemäß Figur 2.

Die Ausgangssituation ist gekennzeichnet durch eine geöffnete Schutzgas-Kammer 5, die mit Luft vom Umgebungsdruck pU gefüllt ist. Die Pressstempel sind geöffnet, der Pressdruck P ist Null. Die induktive Heizung ist ausgeschaltet. Die zu fügenden Bauteile A und B haben die Umgebungstemperatur TU. Die Fügeflächen von A und B wurden hartbearbeitet und weisen eine gegebene Rautiefe und Planparallelität zu einander auf. Die Rautiefe beeinflusst den Entgasungsprozess der Nahtfolie, die Oberflächenaktivierung und den elektrischen Übergangswiderstand an den Grenzflächen zwischen der Nahtfolie und den Bauteilen A und B. Rautiefe und Planparallelität bestimmen die zu wählende Dicke d der Nahtfolie, die beispielsweise 1 mm oder weniger beträgt.

Die Prozessdurchführung beginnt mit dem Einsetzen der Sandwich-Anordnung bestehend aus dem Bauteil A, der Nahtfolie N und dem Bauteil B zwischen Unterstempel 3 und Oberstempel 2, dem Heranfahren des Oberstempels und einer sanften Druckauflastung PG zur Fixierung der Geometrie.

Anschließend wird die Schutzgas-Kammer geschlossen und evakuiert. Die induktive Aufheizung der Fügezone beginnt zunächst mit Teillast, um das Ausgasen der Nahtfolie zu unterstützen. Beim Druck pE wird das Evakuieren beendet und die Schutzgaskammer mit Schutzgas, beispielsweise Argon, bis zum Druck pS gefüllt. Die weitere Aufheizung erfolgt nun mit Volllast. Noch vor Erreichen der isothermen Sintertemperatur TS erfolgt die uniaxiale Druckauflastung mit dem Sinterdruck PS. Zur Einleitung des Sinterprozesses, insbesondere an den Grenzflächen (Andock-Phase), wird optional eine gepulste Gleichspannung DC eingeschaltet. Die Heizung der Fügezone wird so geregelt, dass bei der Temperatur TS eine isotherme Sinterung gewährleistet wird. Die eigentliche Sinterphase tS ist relativ kurz, beispielsweise 10 min. Sie ist gekennzeichnet durch die Herstellung der Verbindung zwischen den Bauteilen A und B und das eindimensionale Sinterschwinden der Nahtfolie N. Nach Beendigung der Sinterphase wird die Heizung abgeschaltet. Die Abkühlphase endet beim Erreichen der Umgebungstemperatur TU mit der Druckentlastung des Bauteils (P= 0) und Belüftung der Schutzgaskammer (p= pU). Die gesamte Zykluszeit tZ beträgt beispielsweise eine Stunde oder weniger.

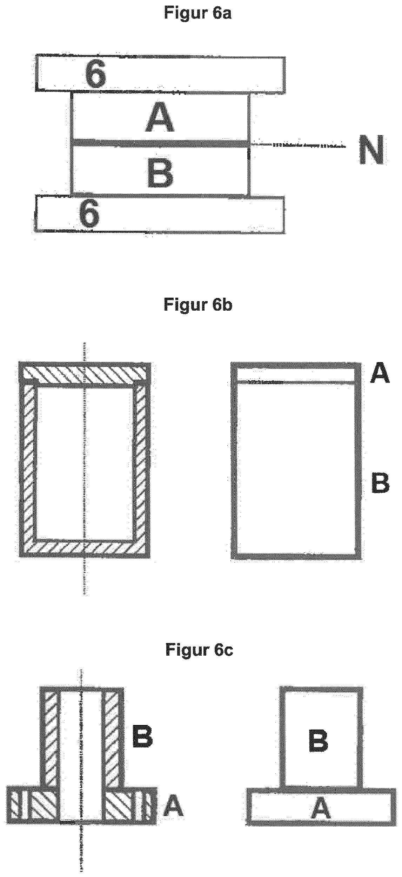

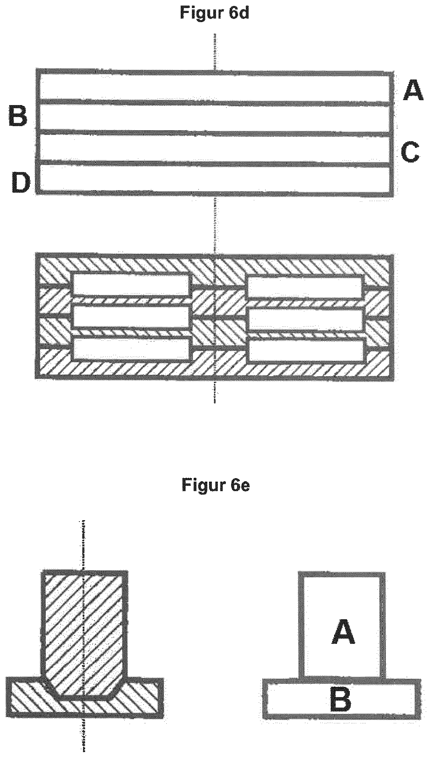

Das erfindungsgemäße Verfahren lässt sich zum Verbinden verschiedener Bauteilgeometrien verwenden. Figur 6 zeigt einige Beispiele. So zeigt Figur 6a eine Sandwich-Anordnung mit einer Nahtfolie N, die zwischen den zu verbindenden Bauteilen A und B eingeschlossen ist. An den Außenseiten der Bauteile A und B sind Suszeptoren 6 angeordnet. Figur 6b zeigt einen Behälter (Bauteil A) mit Deckel (Bauteil B) in Seitenansicht und Schnittansicht. Figur 6c zeigt ein Rohr mit Flansch in Seitenansicht und Schnittansicht, wobei der Flansch eines Rohres Bauteil B und das Rohr Bauteil A darstellen kann. Figur 6d zeigt eine gestapelte Anordnung mehrerer Platten, entsprechend Bauteilen A, B, C, D in Seitenansicht und Schnittansicht. Derartige Aufbauten können beispielsweise als Wärmeübertrager oder in Brennstoffzellen zum Einsatz kommen. Figur 6e zeigt eine Welle (Bauteil A) mit Rad (Bauteil B) in Seitenansicht und Schnittansicht. Die anhand eines erfindungsgemäßen Verfahrens hergestellte Verbindung kann großen Drehmomenten standhalten.

### Ausführungsbeispiel:

Das Ausführungsbeispiel 1 bezieht sich auf eine Bauteilgeometrie gemäß Figur 6a in einer Anlage gemäß Figur 1 mit zusätzlichen Suszeptoren 6.

Die Bauteile A und B sind Oktagone aus gesintertem Siliziumkarbid (SSiC) mit einem Außenkreisdurchmesser von 37 mm und einer Höhe von 3,5 mm. Die Fügeflächen wurden nicht hartbearbeitet sondern blieben wie gesintert. Die Nahtfolie besteht aus einer thermoplastischen SiC-Masse mit gleichmäßig hoher Gründichte und ist soweit teilentbindert, dass Flexibilität und damit Handhabbarkeit und Anpassung an die Fügeflächen erhalten bleiben. Aus einem Graphit-Suszeptor 6, dem Bauteil A, der Nahtfolie N, dem Bauteil B und einem weiteren Graphit-Suszeptor 6 wurde eine Sandwich-Anordnung gestapelt und zwischen Unterstempel 3 und Oberstempel 2 eingespannt. Die Nahtfolie N besaß im Grünzustand eine Dicke von 0,5 mm und eine Gründichte von 1,701 g/cm³.

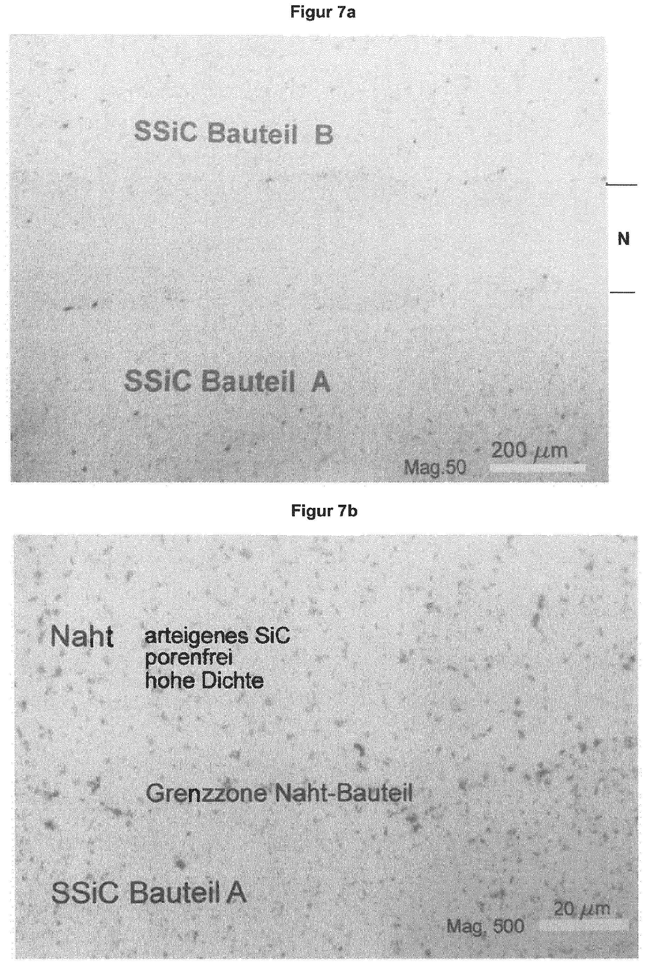

Anschließend begann der Fügeprozess wie in Figur 5 dargestellt. Die Schutzgas-Kammer wurde bis zu einem Restdruck von pE = 1 mbar evakuiert, um sicherzustellen, dass die Nahtfolie weitgehend entgast wurde. Danach erfolgt das Befüllen der Kammer mit Argon, bis zu einem Druck von pS = 2,0 mbar. Die isotherme Sinterung erfolgte bei 1850 °C über einen Zeitraum tS von 10 min. Der uniaxiale Pressdruck P lag bei 30 MPa. Durch die eindimensionale Schwindung der Nahtfolie betrug die Dicke der gesinterten Fügenaht ca. 0,27 mm. Die Fügenaht war poren- und rissfrei mit einer guten Haftung an den Fügeflächen der Bauteile, wie anhand der in Figur 7 dargestellten mikroskopischen Aufnahmen erkannt werden kann.

Der Einsatz einer gepulsten Gleichspannung war im beschriebenen Beispiel nicht erforderlich, könnte aber als Optionsreserve für eine weitere Verkürzung der isothermen Sinterphase betrachtet werden.

## Patentansprüche

1. Verfahren zum Verbinden von Bauteilen aus gesintertem und insbesondere heißgepresstem Siliziumkarbid, mit den folgenden Schritten:
Einbringen eines sinterfähigen Grünkörpers aus einer thermoplastischen SiC-Masse in einen Verbindungsbereich zwischen gegenüberliegenden Verbindungsflächen der Bauteile, wobei der sinterfähige Grünkörper eine Gründichte von zwischen 1,5 und 2 g/cm³ aufweist und teilentbindert ist;
Erhitzen des Grünkörpers und des Verbindungsbereichs auf Sintertemperatur unter Schutzgasatmosphäre oder Vakuum; und
Verpressen der Bauteile mit dem erhitzten Grünkörper durch Beaufschlagung eines Sinterdrucks.

2. Verfahren nach Anspruch 1, **dadurch gekennzeichnet, dass** der in den Verbindungsbereich eingebrachte Grünkörper die Gestalt einer dünnen Schicht hat, vorzugsweise mit einer Dicke von 1 mm oder weniger.

3. Verfahren nach einem der vorhergehenden Ansprüche, **dadurch gekennzeichnet, dass** die Sintertemperatur bei 1800-1950 °C liegt und/oder dass der Sinterdruck bei 20-40 MPa liegt und/oder dass Sinterdruck und Sintertemperatur für 5-15 Minuten aufrechterhalten werden.

4. Verfahren nach einem der vorhergehenden Ansprüche, **dadurch gekennzeichnet, dass** das Erhitzen des Grünkörpers wenigstens zwei Phasen umfasst, wobei der Grünkörper in einer ersten Phase auf eine unterhalb der Sintertemperatur liegende Entgasungstemperatur und erst in einer zweiten Phase auf Sintertemperatur erhitzt wird, wobei vorzugsweise vorgesehen ist, dass der Verbindungsbereich während der ersten Phase des Erhitzens evakuiert wird und während der zweiten Phase mit Schutzgas beaufschlagt wird.

5. Verfahren nach einem der vorhergehenden Ansprüche, **dadurch gekennzeichnet, dass** der Grünkörper vor dem Erhitzen zwischen den Verbindungsflächen fixiert wird.

6. Verfahren nach einem der vorhergehenden Ansprüche, **dadurch gekennzeichnet, dass** das Erhitzen des Grünkörpers durch Widerstandsheizung erfolgt.

7. Verfahren nach einem der vorhergehenden Ansprüche, **dadurch gekennzeichnet, dass** das Erhitzen des Grünkörpers mittels Induktion erfolgt.

8. Verfahren nach Anspruch 7, **dadurch gekennzeichnet, dass** der Grünkörper unter Verwendung eines Suszeptors erhitzt wird.

9. Verfahren nach einem der vorhergehenden Ansprüche, **dadurch gekennzeichnet, dass** während des Verpressens eine vorzugsweise gepulste Gleichspannung über Verbindungsflächen der Bauteile und den Grünling gelegt wird.

10. Verwendung eines Verfahrens nach einem der vorhergehenden Ansprüche zum Verschließen eines Behälters mit einem Deckel, wobei zumindest die Kontaktflächen des Behälters und Deckels aus gesintertem oder heißgepresstem Siliziumkarbid (SiC) bestehen.

11. Verwendung nach Anspruch 10, **dadurch gekennzeichnet, dass** der Behälter radioaktives oder toxisches Material enthält.

## Claims

1. Method for joining components made from sintered and, in particular, hot-pressed silicon carbide, comprising the following steps:
introducing a sinterable green body made of a thermoplastic SiC compound into a joining region between opposing joining surfaces of the components, wherein the sinterable green body has a green density of between 1.5 and 2 g/cm³ and is partially debound;
heating the green body and the joining region to sintering temperature under a protective gas atmosphere or vacuum; and
pressing the components with the heated green body by application of a sintering pressure.

2. Method according to claim 1, **characterised in that** the green body introduced into the joining region has the form of a thin layer, preferably with a thickness of 1 mm or less.

3. Method according to one of the preceding claims, **characterised in that** the sintering temperature is 1800-1950°C and/or the sintering pressure is 20-40 MPa and/or the sintering pressure and sintering temperature are maintained for 5-15 minutes.

4. Method according to one of the preceding claims, **characterised in that** the heating of the green body comprises at least two phases, wherein the green body is heated in a first phase to a degassing temperature that is lower than the sintering temperature and only is heated to sintering temperature in a second phase, wherein it is preferably provided that the joining region is evacuated during the first heating phase and is charged with protective gas during the second phase.

5. Method according to one of the preceding claims, **characterised in that** the green body is fixed between the joining surfaces before being heated.

6. Method according to one of the preceding claims, **characterised in that** heating of the green body is carried out by resistance heating.

7. Method according to one of the preceding claims, **characterised in that** heating of the green body is carried out by induction.

8. Method according to claim 7, **characterised in that** the green body is heated using a susceptor.

9. Method according to one of the preceding claims, **characterised in that** a preferably pulsed direct voltage is applied across joining surfaces of the components and the green compact during pressing.

10. Use of a method according to one of the preceding claims for closing a container with a lid, at least the contact surfaces of the container and the lid consisting of sintered or hot-pressed silicon carbide (SiC).

11. Use according to claim 10, **characterised in that** the container contains radioactive or toxic material.

## Revendications

1. Procédé pour assembler des composants composés d'un carbure de silicium fritté et en particulier pressé à chaud, avec les étapes suivantes :
l'introduction d'un corps cru frittable composé d'une masse en SiC thermoplastique dans une zone de liaison entre des surfaces de liaison opposées des composants, dans lequel le corps cru frittable présente une densité en cru entre 1,5 et 2 g/cm³ et est en partie délianté ;
de chauffage du corps cru et de la zone de liaison à une température de frittage sous atmosphère inerte ou sous vide ; et
de compression des composants avec le corps cru chauffé par application d'une pression de frittage.

2. Procédé selon la revendication 1, **caractérisé en ce que** le corps cru introduit dans la zone de liaison a la forme d'une couche fine, de préférence avec une épaisseur de 1 mm ou moins.

3. Procédé selon l'une quelconque des revendications précédentes, **caractérisé en ce que** la température de frittage est de l'ordre de 1800-1950 °C, et/ou que la pression de frittage est de l'ordre de 20-40 MPa, et/ou que la pression de frittage et la température de frittage sont maintenues pendant 5-15 minutes.

4. Procédé selon l'une quelconque des revendications précédentes, **caractérisé en ce que** le chauffage du corps cru comprend au moins deux phases, dans lequel le corps cru est chauffé dans une première phase à une température de dégazage inférieure à la température de frittage et seulement dans une deuxième phase à une température de frittage, dans lequel il est prévu de préférence que la zone de liaison est mise sous vide pendant la première phase du chauffage et est soumise à l'action d'un gaz de protection au cours de la deuxième phase.

5. Procédé selon l'une quelconque des revendications précédentes, **caractérisé en ce que** le corps cru est fixé avant le chauffage entre les surfaces de liaison.

6. Procédé selon l'une quelconque des revendications précédentes, **caractérisé en ce que** le chauffage du corps cru est effectué par chauffage par résistance.

7. Procédé selon l'une quelconque des revendications précédentes, **caractérisé en ce que** le chauffage du corps cru est effectué par induction.

8. Procédé selon la revendication 7, **caractérisé en ce que** le corps cru est chauffé en utilisant un suscepteur.

9. Procédé selon l'une quelconque des revendications précédentes, **caractérisé en ce que** pendant la compression une tension continue pulsée de préférence est appliquée par l'intermédiaire des surfaces de liaison des composants et du compact á vert.

10. Utilisation d'un procédé selon l'une quelconque des revendications précédentes pour fermer un contenant avec un couvercle, dans laquelle au moins les surfaces de contact du contenant et du couvercle consistant en un carbure de silicium (SiC) fritté ou pressé à chaud.

11. Utilisation selon la revendication 10, **caractérisée en ce que** le contenant contient du matériau radioactif ou toxique.
